# EUROPEAN PATENT APPLICATION

(11) **EP 0 982 250 A1**
(43) Date of publication of application: **01.03.2000**
(21) Application number: 99202623.7
(22) Date of filing: 11.08.1999
(51) Int. Cl.: B65G 47/92, B65G 47/90, B65G 47/91

(54) **Device for displacing through a certain height objects supplied in a row.**

(30) Priority: 28.08.1998 NL 1009962
(71) Applicant: EBM TECHNIEK B.V., 3925 CK Scherpenzeel (NL)
(72) Inventor: Fortman, Roland, 3956 EL Leersum (NL); Rijksen, Rijk, 8075 PH Elspeet (NL); De Gooyer, Gerrit, 3905 MG Veenendaal (NL)
(74) Representative: Schumann, Bernard Herman Johan

(57) **Abstract**

The invention relates to a device for displacing objects supplied in a row through a certain height from a first to a second position, characterized in that the device is provided with:
- a frame on which are arranged at least one rotatable arm, which is provided on one end with at least one engaging member, and drive means for rotating the arm;
- coupling means for separately coupling the engaging member to an object in the first position; and
- uncoupling means for uncoupling the engaging member and the object in the second position.

## Description

The invention relates to a device for displacing objects supplied in a row through a certain height from a first to a second position.

Such a device is known in practice and is used for instance in a production system to displace objects between conveyor belts located one above another. The known device functions as an "article lift". A certain number of objects are collected in the lift and then displaced collectively to the conveyor belt at a higher or lower position.

The known device has the drawback herein that time loss results from the collecting of a plurality of objects.

The invention has for its object to provide a device of the type stated in the preamble which obviates this drawback and which can be incorporated into an existing production process without having an adverse effect on the speed of the process.

For this purpose the device according to the invention has the feature that the device is provided with:
- a frame on which are arranged at least one rotatable arm, which is provided on one end with at least one engaging member, and drive means for rotating the arm;
- coupling means for separately coupling the engaging member to an object in the first position; and
- uncoupling means for uncoupling the engaging member and the object in the second position.

In a first preferred embodiment the device further comprises detection means for actuating the coupling means on detection of an object in the first position. This embodiment also enables problem-free processing of objects supplied with variable pitch.

In a further preferred embodiment the device is provided with two arms, wherein each arm is provided on an outer end thereof with at least one engaging member. A high processing speed can be achieved with this preferred embodiment.

In yet a further preferred embodiment the engaging member is slidable between a rest position, in which the engaging member is uncoupled from the object, and an operating position in which the engaging member can be coupled to the object. The engaging member is preferably slidable substantially transversely of the plane of rotation of the arm. In another preferred embodiment the coupling means comprise a support element provided with a stop surface, which support element is mounted on the arm and is provided with an arcuate slot, in which the engaging member is movably received, and a stop member which is fixed on the frame for movement of the stop surface from a rest position, in which the engaging member occupies the rest position, to an operating position in which the engaging member occupies the operational position. By means of these elegant preferred embodiments a rapid coupling of the engaging member to the object can be effected using a mechanical construction not susceptible to malfunction, which contributes to the high processing speed of the whole device.

The uncoupling means preferably comprise a cam which is connected to the stop surface and a guide track for urging the cam into a determined position, this guide track being mounted on the frame. This preferred embodiment also has a disturbance-free mechanical construction contributing to the high processing speed of the whole device.

The engaging member is preferably a magnet. In this preferred embodiment the device according to the invention can be very readily applied in combination with the transporting system described in applicant's international application no. 97/42109 in which product containers are used which are provided with a plate of magnetizable material.

In yet a further preferred embodiment the device is provided with means for substantially maintaining the orientation of an object during displacement of the object from the first to the second position. By means of this preferred embodiment it is possible to retain the orientation of objects during displacement from the one conveyor belt to the other, so that for instance filled product containers can be moved without problem by means of the device according to the invention.

In yet another preferred embodiment the device is provided with tilting means for tilting an object during displacement of the object from the first to the second position. By means of this preferred embodiment it is possible to tilt the objects, for instance product containers in which products are arranged, and herein empty them at a further chosen moment during displacement from the one conveyor belt to the other.

The invention will now be further described in more detail with reference to the drawing, in which:
figure 1 shows a schematic view of a device according to the invention in a possible arrangement as component of a production process;
figure 2 shows the device of figure 1 in partly cut-away view in more detail;
figure 3 shows one of the engaging members in partly cut-away view in operating position; and
figure 4 shows one of the engaging members in partly cut-away view in the rest position.

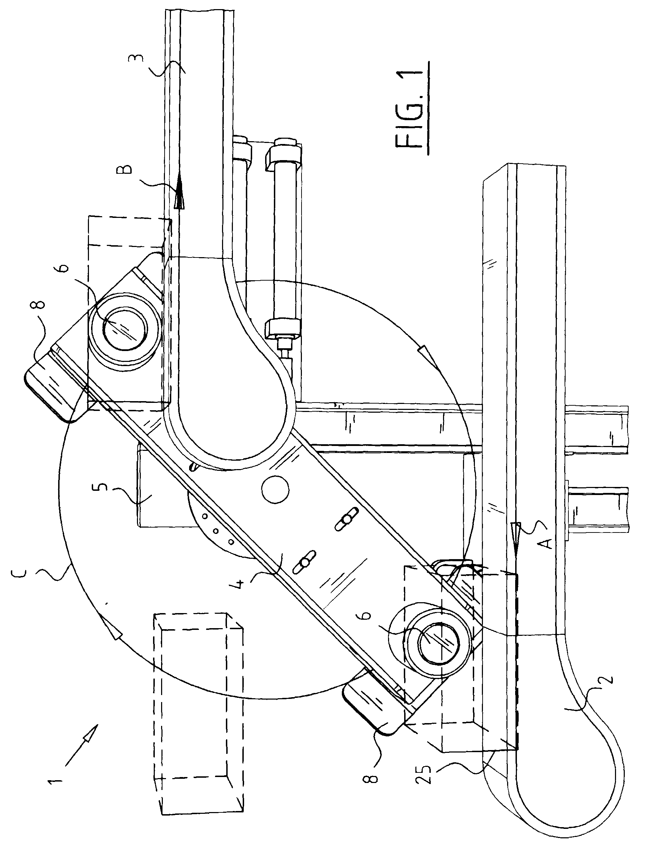

Figure 1 shows device 1 in schematic view, in which device 1 is disposed on the end of two parallel conveyor belts 2 respectively 3 placed one above the other. In this embodiment conveyor belt 2 supplies a row of objects 25 in the direction of arrow A. After displacement this row of objects must be discharged in the direction of arrow B by means of the higher placed conveyor belt 3. This height displacement is performed using the device according to the invention.

Device 1 is provided for this purpose with two arms 4 lying mutually in line which are mounted on frame 5 for rotation in the direction of arrow C. Each of the two arms has an engaging member 6 on one end thereof. Each engaging member can be separately coupled by means of coupling means to an object 25 situated in the first position as shown in figure 1 at the end of conveyor belt 2. Uncoupling means are also provided for uncoupling engaging member 6 and object 25 in the second position as shown in figure 1 at the beginning of conveyor belt 3. The coupling means and uncoupling means will be elucidated with reference to the following figures. It is noted that the device according to the invention can of course also be embodied such that it rotates in opposite direction to displace objects from a higher placed to a lower placed conveyor belt.

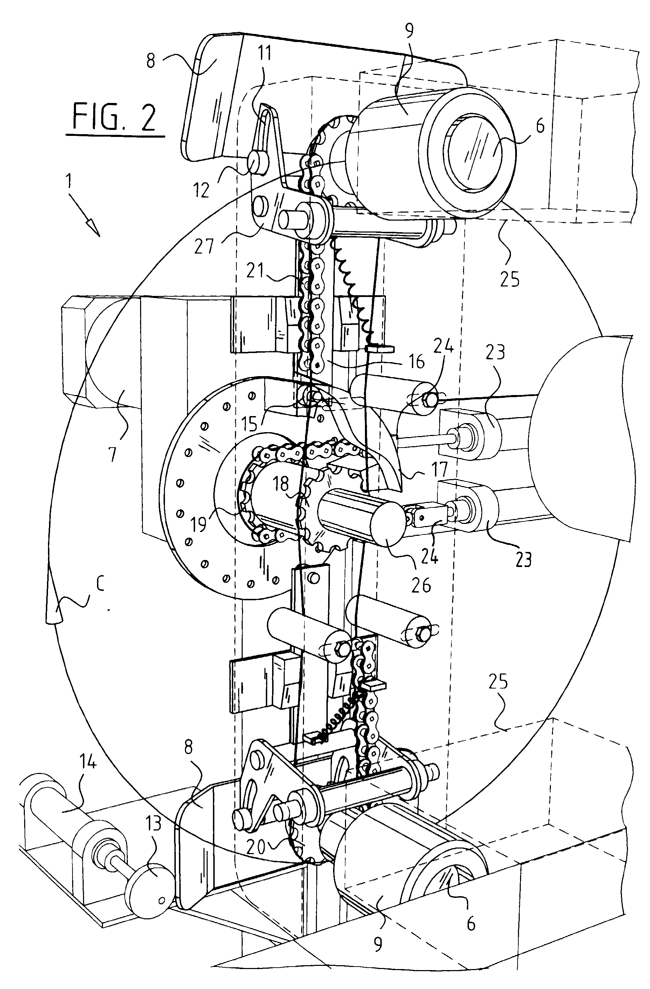

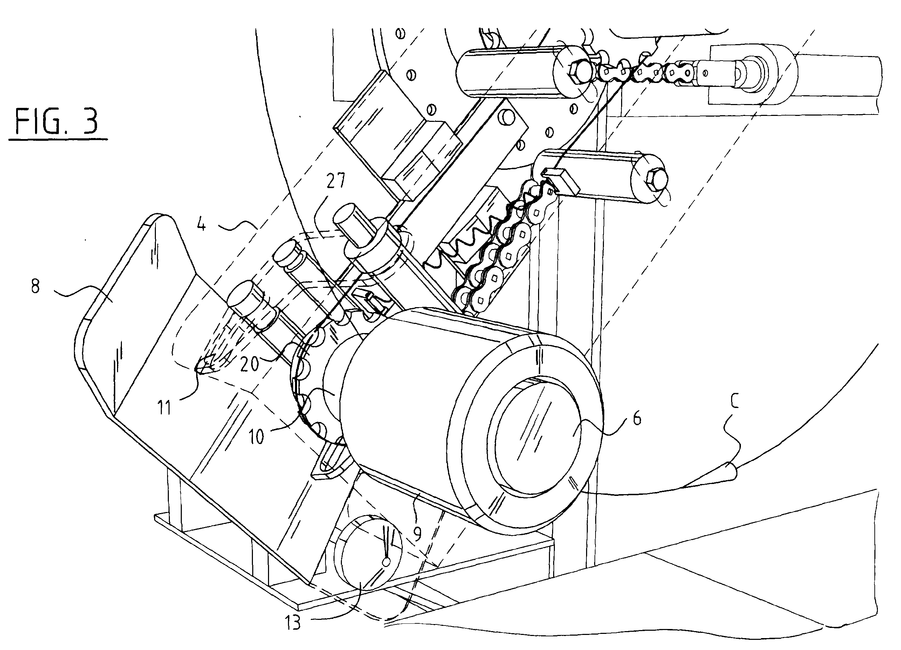

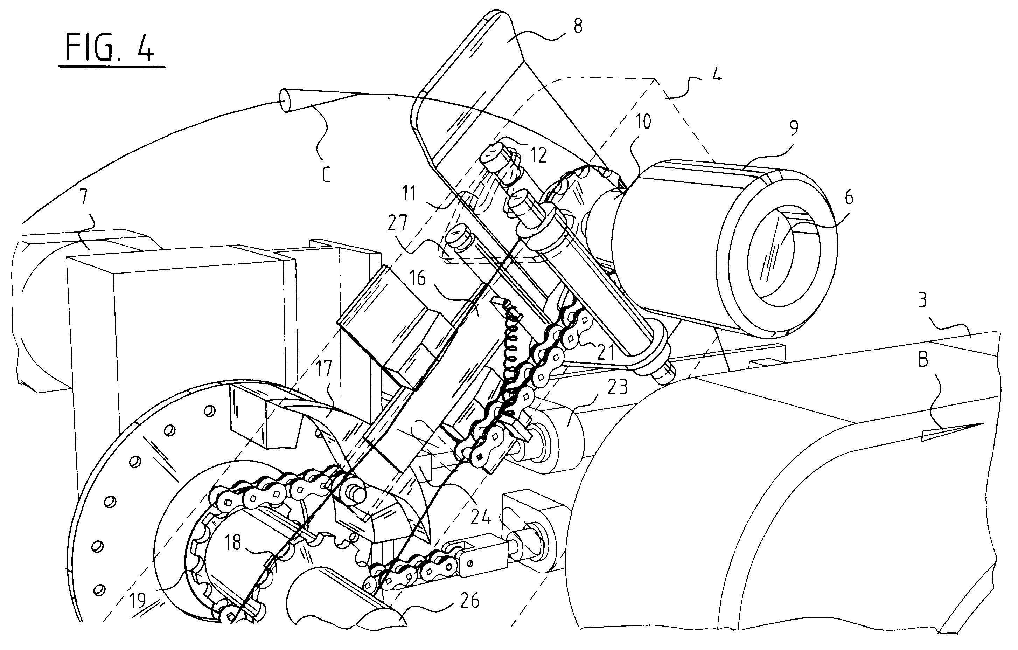

Figure 2 shows device 1 in more detail. Figure 3 shows one of the engaging members in operational position and figure 4 shows one of the engaging members in rest position. Figures 2-4 are partly cut-away for the sake of clarity.

Figure 2 shows schematically drive means 7 for driving a drive shaft 26 on which are mounted arms 4.

In the shown preferred embodiment the coupling means for coupling an engaging member 6 to an object 25 comprise a support element 27 fixed to arm 4. Support element 27 is provided with a stop surface 8. In support element 27 is arranged an arcuate slot 11 in which a shaft 12 is received movably. Shaft 12 is coupled to shaft 10 of magnet 6 which forms the engaging member. The coupling means also comprise a cylinder 14 for operating a stop member 13, both of these being fixed to frame 5. Stop member 13 is adapted for co-action with stop surface 8 to move stop surface 8 from the rest position to the operating position. Magnet 6 is moved correspondingly from the rest position to the operating position. For this purpose magnet 6 is received slidably in sleeve 9. It is noted that in the rest position thereof stop surface 8 runs substantially parallel to the plane of rotation of arms 4.

The uncoupling means are adapted to move magnet 6 from the operating position (shown in figure 3) to the rest position (shown in figure 4). The uncoupling means comprise for this purpose a cam 15 which is connected by means of a cam rod 16 to support element 27 and therefore to stop surface 8. Provided on frame 5 is a guide track 17 for cam 15 which urges cam 15 into a determined position, as a result of which the position of stop surface 8, and therefore of magnet 6, changes. Cam 15 preferably comprises a roller so as to prevent wear as far as possible.

Device 1 according to the invention is further provided with means for substantially maintaining the orientation of an object during displacement of the object from the first to the second position. Full product containers for instance or other objects of which the orientation is important can hereby be displaced without problem. These means are shown most clearly in figure 2 and in the shown embodiment comprise chain wheels 18 and 20. Chain wheel 18 is arranged on drive shaft 26, while chain wheels 20 are each arranged on the two magnet shafts 10. Chain wheels 18 and 20 are mutually connected for rotation by means of chain 21, which has the result that the orientation in which an object 25 is coupled to a magnet 6 in the first position is maintained during displacement to the second position.

In the shown preferred embodiment device 1 is also provided with tilting means for tilting an object during displacing of the object from the first to the second position. This makes it possible to empty for instance product containers during displacement by device 1. the tilting means comprise the same chain wheels 18, 20 and chain 21. Added hereto is an additional chain wheel 19 on drive shaft 26 which is connected by means of a chain 22 for rotation to control members 24 which are mounted on cylinders 23. By means of cylinders 23 and control members 24 chain wheel 19 can be rotated independently of the rotation of arms 4. This also results in rotation of chain wheel 18 and therewith of chain wheels 20 and thereby of magnets 6, which results in a tilting of objects 25 coupled to magnets 6. It will be apparent that the function of the (chain) wheels and the chain can be fulfilled by many other suitable means known in this field, including other wheels such as pulleys, and drive belts.

The operation of device 1 is briefly as follows:

When an object 25 is situated in the first position on the end of conveyor belt 2, this is detected using detection means such as a photocell (not shown). The detection means generate a signal to cylinder 14 which subsequently extends stop member 13 which moves the passing stop surface 8 from the rest position to the operational position. This also results in movement of magnet 6 from the rest position to the operational position so that magnet 6 can be coupled to an object 25 which is provided for this purpose with a suitable magnetizable material.

The coupled object moves upward in the direction of path C. After a time roller 15 herein runs along guide track 17. By means of cam rod 16 the stop surface 8 is herein moved from the operational position to the rest position. This has the direct consequence that magnet 6 moves from the operational position to the rest position and is thereby uncoupled from object 25 when object 25 is situated in the second position at the beginning of conveyor belt 3. Relatively little force is required for this purpose owing to the favourable mechanical construction of the coupling means.

It is noted by way of illustration that device 1 in the shown preferred embodiment can make 30 to 40 revolutions per minute, which in the case of two arms results in a processing speed of 60 to 80 objects per minute. The speed of device 1 is herein in keeping with that of most production systems.

The invention is of course not limited to the shown and described preferred embodiment. Many variants of the outlined principle can be envisaged, including the use of only one arm 4 or more than two arms 4 in accordance with the desired processing speed. In addition to the described magnets used, there are also many other engaging members which are suitable for application with device 1. Some examples are grippers or suction cups. All these variants fall within the scope of protection sought, the range of which is defined by the appended claims in combination with the foregoing description and drawing of the preferred embodiment.

## Claims

1. Device for displacing objects supplied in a row through a certain height from a first to a second position,
**characterized in that**
the device is provided with:
- a frame on which are arranged at least one rotatable arm, which is provided on one end with at least one engaging member, and drive means for rotating the arm;
- coupling means for separately coupling the engaging member to an object in the first position; and
- uncoupling means for uncoupling the engaging member and the object in the second position.

2. Device as claimed in claim 1, wherein the device further comprises detection means for actuating the coupling means on detection of an object in the first position.

3. Device as claimed in claim 1 or 2, wherein the device is provided with two arms, wherein each arm is provided on an outer end thereof with at least one engaging member.

4. Device as claimed in claim 1, 2 or 3, wherein the engaging member is slidable between a rest position, in which the engaging member is uncoupled from the object, and an operating position in which the engaging member can be coupled to the object.

5. Device as claimed in claim 4, wherein the engaging member is slidable substantially transversely of the plane of rotation of the arm.

6. Device as claimed in claim 3, 4 or 5, wherein the coupling means comprise a support element provided with a stop surface, which support element is mounted on the arm and is provided with an arcuate slot in which the engaging member is movably received, and a stop member which is fixed on the frame for movement of the stop surface from a rest position, in which the engaging member occupies the rest position, to an operating position in which the engaging member occupies the operational position.

7. Device as claimed in claim 6, wherein in the rest position the stop surface runs substantially parallel to the plane of rotation.

8. Device as claimed in claim 6 or 7, wherein the uncoupling means are adapted to move the stop surface from the operating position to the rest position.

9. Device as claimed in claim 8, wherein the uncoupling means comprise a cam which is connected to the stop surface and a guide track for urging the cam into a determined position, this guide track being mounted on the frame.

10. Device as claimed in any of the foregoing claims, wherein the engaging member is a magnet.

11. Device as claimed in any of the foregoing claims, wherein the device is provided with means for substantially maintaining the orientation of an object during displacement of the object from the first to the second position.

12. Device as claimed in claim 11, wherein the means for maintaining the orientation comprise a number of rotatable wheels, at least one of which is arranged on the frame, and wherein each engaging member is coupled for rotation to at least one wheel, which wheel is connected for rotation to the frame wheel.

13. Device as claimed in any of the foregoing claims, wherein the device is provided with tilting means for tilting an object during displacement of the object from the first to the second position.

14. Device as claimed in claim 13, wherein the tilting means comprise a number of rotatable wheels, at least one of which is arranged on the frame, and wherein each engaging member is coupled for rotation to at least one wheel, which wheel is connected for rotation to the frame wheel, which device is further provided with means for controlling the rotation of at least the frame wheel.
